Europäisches Patentamt

European Patent Office

Office européen des brevets

(11) Publication number: **0 191 658**
**B1**

# EUROPEAN PATENT SPECIFICATION

(45) Date of publication of patent specification: **05.04.89**

(51) Int. Cl.⁴: **G 01 F 23/28**

(21) Application number: **86400030.2**

(22) Date of filing: **08.01.86**

(54) **Liquid level height-measuring apparatus.**

(30) Priority: **09.01.85 JP 1881/85**

(43) Date of publication of application:
**20.08.86 Bulletin 86/34**

(45) Publication of the grant of the patent:
**05.04.89 Bulletin 89/14**

(84) Designated Contracting States:
**CH DE FR GB LI SE**

(56) References cited:
**EP-A-0 135 423**
**WO-A-83/03135**
**DE-B-2 305 036**

(73) Proprietor: **TOKYO KOGAKU KIKAI KABUSHIKI KAISHA**
**75-1, Hasunuma-cho Itabashi-ku**
**Tokyo (JP)**

(72) Inventor: **Horikawa, Yoshio**
**c/o Tokyo Kogaku Kikai Kabushiki Kaisha 75-1**
**Hasunuma-cho Tokyo (JP)**
Inventor: **Kimura, Kazuaki**
**c/o Tokyo Kogaku Kikai Kabushiki Kaisha 75-1**
**Hasunuma-cho Tokyo (JP)**
Inventor: **Sugai, Hiroo**
**c/o Tokyo Kogaku Kikai Kabushiki Kaisha 75-1**
**Hasunuma-cho Tokyo (JP)**

(74) Representative: **Mongrédien, André et al**
**c/o SOCIETE DE PROTECTION DES INVENTIONS**
**25, rue de Ponthieu**
**F-75008 Paris (FR)**

Courier Press, Leamington Spa, England.

## Description

### Field of the invention

The present invention relates to a liquid level height-measuring apparatus for measuring a height of a liquid level to be measured by using distance light waves modulated with a predetermined modulation signal.

### Background of the invention

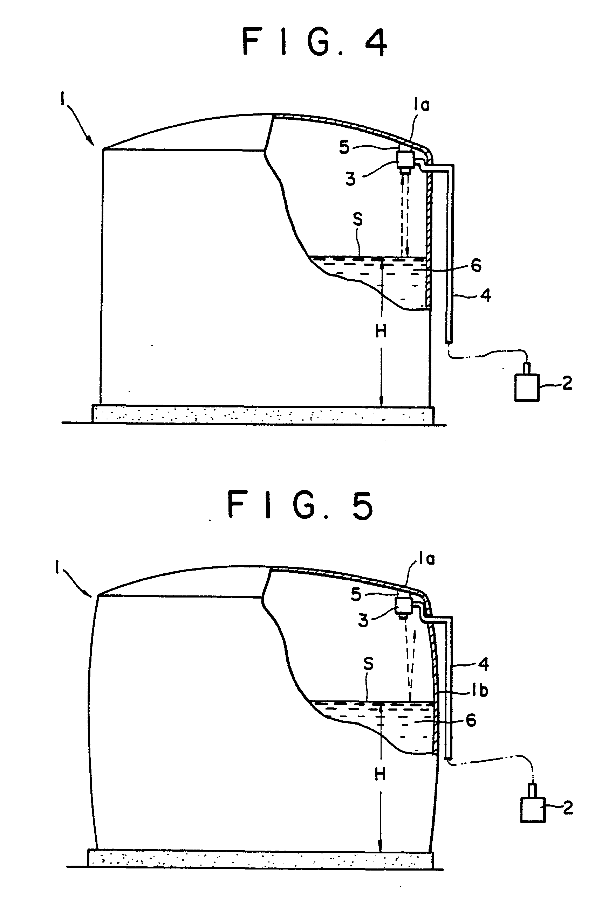

The liquid level height-measuring apparatus of this type has been used, for example, for measuring a height of a liquid level S to be detected (hereinafter briefly referred to as "liquid level S") in a crude oil tank 1 as shown in Figure 4.

In Figure 4, the liquid level height-measuring apparatus comprises a light wave distance-measuring section 2 for generating distance-measuring light waves modulated with a predetermined modulation signal, an objective optical means 3 for receiving and ejecting the distance-measuring light waves, and an optical fiber 4 for transmitting the distance-measuring light waves from the light wave distance-measuring section 2 to the objective optical means 3. The objective optical means 3 is attached inside of an upper wall 1a of the crude oil tank 1 through a bracket 5.

According to such a liquid level height measuring apparatus, when the distance-measuring light waves of a specific wavelength are generated at the light wave distance-measuring section 2, the distance-measuring light waves are transmitted to the objective optical means 3 through the optical fiber 4, and then irradiated upon the liquid level surface S therethrough. The irradiated distance-measuring light waves are reflected on the liquid level surface S to be converted to reflected light waves, which are returned to the light wave distance-measuring section 2 through the objective optical means 3 and the optical fiber 4. Then, the light waves distance-measuring section 2 calculates a time delay of the reflected light waves with respect to the modulation signal of the distance-measuring light waves to display the height of the liquid level S.

The above-mentioned objective optical means 3 is attached to the upper wall 1a of the crude oil tank 1 such that the optical axis of an objective lens (not shown) thereof may be perpendicular to the liquid level surface S. This attaching is performed in the state that no crude oil is contained in the crude oil tank 1. When crude oil 6 is stored in such a crude oil tank 1, the tank is deformed and a deformation amount varies depending upon the stored amount of the crude oil 6. Incidentally, such a deformation amount differs depending upon the size of the crude oil tank 1. That is, when the crude oil tank 1 is small, the deformation amount of the crude oil tank 1 due to the storage of the crude oil 6 is small. Thus, the objective optical means 3 will not tilt due to such deformation.

However, when the crude oil tank 1 becomes larger, as shown in Figure 5, the side wall 1b of the crude oil tank 1 is largely deformed sidewise in an arch fashion by the crude oil stored therein and the upper wall 1a is relatively largely deformed toward a flattening direction. Therefore, as shown in Figure 5, the objective optical means 3 is largely inclined in this case. As a result, even if the distance-measuring light waves are irradiated upon the liquid level surface S from the objective optical means 3, the reflected light waves from the liquid level surface S do not proceed to the objective optical means 3. Thus, it becomes impossible that the reflected light waves are received by the objective lens of the objective optical means 3 to measure the height H of the above-mentioned liquid level S. This poses a problem.

Furthermore, in the case that the objective optical means 3 and the optical fiber 4 as the light wave transmission means are connected together and supported inside of the crude oil tank 1, the centroid of the objective optical means 3 may deviate due to the weight of the optical fiber 4 itself depending upon the arranged state of the optical fiber 4, external vibrations, etc. If the centroid deviates, the orientating direction of the objective optical means 3 is not perpendicular (a normal state) with respect to the liquid level surface S, so that there is a fear that the measurement of the height of the liquid level S becomes impossible.

It is an object of the present invention to provide a liquid level height-measuring apparatus which can accurately and assuredly measure a height of liquid level even when an upper inner wall of the crude oil tank supporting an objective optical means is deformed.

These and other objects, features, and advantages of the present invention will be well appreciated upon reading of the following description of the invention when taken in conjunction with the attached drawings with understanding that some modifications, variations, and changes could be easily done by the skilled in the art to which the invention pertains without departing from the scope of claims appended hereto.

It is known by the documents WO—A—83/03135 and DE—B—2 305 036 an optical system mounted on gimbals or gimbals-like suspension but in the context of a ship's tank. The document EP—A—0 135 423 cited according to the article 54(3) EPC deals with an apparatus for measuring the liquid level by using distance light waves modulated with a predetermined modulation signal.

### Summary of the invention

In order to solve the above-mentioned object, the invention relates to a liquid level measuring apparatus comprising means for transmitting a beam of modulated light waves onto the surface of the liquid, said means including an objective lens means, means for receiving said beam after reflection from the surface of the liquid after having passed back through said objective lens means, and means for determining the level of the liquid on the basis of a time lag between the transmitted beam and the received beam, caracterised in that the objective lens means is constituted by two objective lens units consisting of a first objective lens unit containing a first objective lens and a relay lens, for forming an image of the light beam at the focal point thereof, and an auxiliary objective lens unit, containing a second objective lens for projecting the light waves from said focal point upon the surface of the liquid, and the auxiliary objective lens unit is attached to the first objective lens unit by means of a suspension support mechanism which is such that the first objective lens unit can rotate freely with respect to the auxiliary objective lens unit about said focal point as a center, whereby the auxiliary objective lens unit can remain in its normal orientation with its axis perpendicular to the liquid surface, if the first objective lens unit is tilted out of the position by movement of its support.

By so constructing, since the objective optical means integrally attached to the upper wall of the crude oil tank is constituted by the objective optical unit and the auxiliary optical unit, and the auxiliary optical unit is connected to the objective optical unit by means of the suspension support mechanism, even when the upper wall of the crude oil tank is deformed, the auxiliary optical unit does not rotate and keeps its normal posture even if the objective optical unit rotates following the deformation of the upper wall of the crude oil tank. Thereby, since the light waves irradiated upon the liquid level surface through the auxiliary optical unit are reflected perpendicularly with respect to the liquid level surface and proceeds to the objective optical means, the height of the liquid level can be accurately and assuredly measured.

As mentioned above, the present invention has the effect that even when the upper inner wall or the like of the crude oil tank supporting the objective optical means is deformed, the height of the liquid level to be detected can be accurately and assuredly measured.

Brief description of the attached drawings

For facilitating better understanding of the invention, reference is made to the attached drawings, wherein:

Figures 1—3 are views showing an embodiment according to the present invention, Figure 1 being a sectional front view of a principal portion, Figure 2 a sectional view taken along a II—II line of Figure 1, and Figure 3 a sectional front view of the principal portion illustrating a function; and

Figure 4 and 5 are views showing a prior art example, Figure 4 being an illustrative view of a normal state, and Figure 5 an illustrative view of an abnormal state.

Description of the preferred embodiments

A preferred embodiment according to the present invention will be explained below more in detail with reference to the attached drawings.

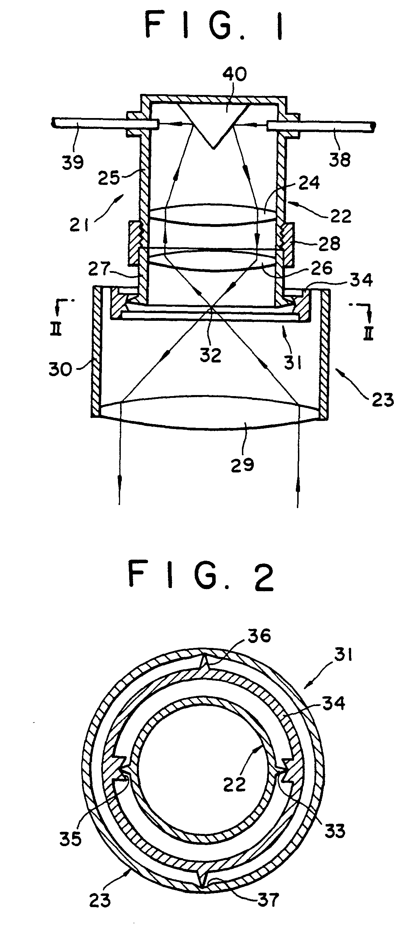

In Figures 1 to 3, an objective optical means 21 is constituted by an objective optical unit 22 and an auxiliary optical unit 23, the objective optical unit 22 is constituted by an upper casing 25 containing a prism 40 and an objective lens 24, a lower casing 27 containing a relay lens 26, a couple ring 28 integrally coupling the upper casing 25 and the lower casing 27, etc. The auxiliary optical unit 23 is constituted by an objective lens 29 and a casing 30 containing and supporting the objective lens 29. The auxiliary optical unit 23 is integrally connected to the objective optical unit 22 by the below-mentioned gimbal mechanism 31 as a kind of suspension support mechanisms. The focal point 32 of the relay lens 26 is coincident with that of the objective lens 29. For this reason, when the objective optical unit 22 and the auxiliary optical unit 23 are both directed perpendicularly with respect to a liquid level surface S (not shown), as shown in Figure 1, the objective lens 29 receiving the light waves from the focal point 32 is so arranged as to eject the light waves perpendicularly upon the liquid level surface S and receive the reflected perpendicular light waves from the liquid level surface S.

As shown in Figure 2, two conical projections 33 are formed in right and left directions within the same horizontal plane of the focal point 32, and in the vicinity of the lower end of the objective optical unit 22, and engage with two conical recesses 35 formed in an intermediated ring 34, respectively. Further, two conical projections 36 are formed in the intermediate ring 34 in forward and rearward directions within the same horizontal plane of the focal point 32. The projections 36 engage with two conical recesses 37 formed near the upper edge of the auxiliary optical unit 23, respectively. The gimbal mechanism 31 is constituted by these projections 33, 36, the recesses 35, 37, the intermediate ring 34, etc. Therefore, when the objective optical unit 22 is rotated in a rightward or leftward direction, the objective optical unit 22 and the intermediate ring 34 rotate around the engaging portions between the projections 36 and the recesses 37 as fulcrum, while the auxiliary optical unit 23 does not rotate and maintains the normal posture thereof. When the objective optical unit 22 is rotated in a forward or rearward direction, only the objective optical unit 22 rotates around the engaging portions between the projections 33 and the recesses 35 as fulcrum, while the auxiliary optical unit 23 does not rotate together with the intermediate ring 34 and the normal posture thereof is also maintained. Accordingly, even when the objective optical unit 22 is rotated around the focal point 32 as a center in any direction, the auxiliary optical unit 23 does not rotate and always keeps its normal posture.

In the figures, a reference numeral 38 is an optical fiber for transmitting the distance-measuring light waves to the inside of the objective optical means 21 from a light wave distance-measuring section (not shown) containing a luminescent diode for generating the distance-measuring light waves, a light receiving diode for receiving the reflected light waves, an operation processing control circuit for outputting a modulation signal to the luminescent diode and receiving an output signal from the luminescent diode, etc. A reference numeral 39 is an optical fiber for transmitting the reflected light waves from the objective optical means 21 to the light wave distance-measuring section.

The construction of this embodiment is as mentioned above. Next, a function thereof will be explained below.

The distance-measuring light waves generated from the light wave distance-measuring section are fed into the objective optical unit 22 through the optical fiber 38, and are reflected by the prism 40 and forms an image at the focal point 32 after passing through the objective lens 24 and the relay lens 26. The distance-measuring light waves passing through the focal point 32 are perpendicularly irradiated upon the liquid level surface (not shown) through the objective lens 29 in the auxiliary optical unit 23. The light waves are perpendiculary reflected from the liquid level surface and pass through the focal point 32 after the objective lens 29. Then, the reflected light waves pass through the relay lens 26 and the objective lens 24, are reflected on the prism 40, and returned to the light wave distance-measuring section through the optical fiber 39. Thereby, the height of the liquid level is measured.

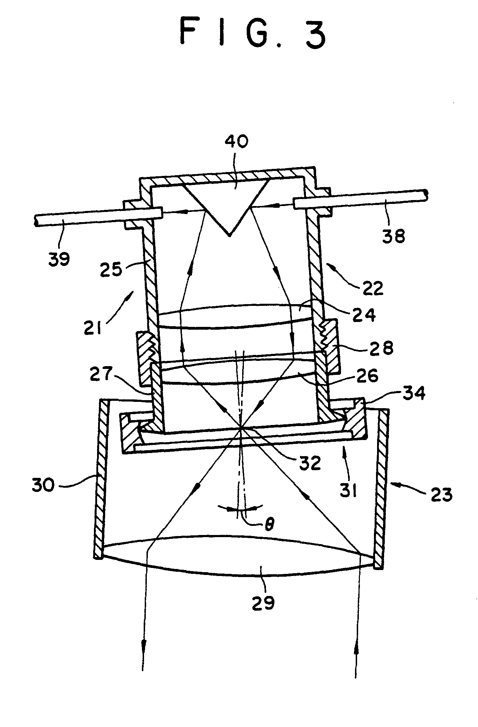

As shown in Figure 3, when the upper wall of the crude oil tank or the like (not shown) to which the objective optical unit 22 is attached is deformed to rotate the objective optical unit 22 by an angle, the rotation takes place around the focal point 32 as a center. Since the auxiliary optical unit 23 is not moved by the action of the gimbal mechanism 31, the distance-measuring light waves entering the objective optical unit 22 are perpendicularly irradiated upon the liquid level surface through the objective lens 29 after passing through the objective lens 24, the relay lens 26 and the focal point 32 as in the state prior to the rotation of the objective optical unit 22. The light waves are perpendicularly reflected from the liquid level surface, and pass through the focal point 32 after the objective lens 29. Thus, as in the case with the state prior to the rotation of the objective optical unit 22, the light waves return to the light wave distance-measuring section through the optical fiber 39 in spite of the rotation of the objective optical unit 22. That is, even when the upper wall of the crude oil tank or the like to which the objective optical unit 22 is attached is deformed to rotate the objective optical unit 22, the height of the liquid level can be equally measured as usual. The suspension support mechanism for the auxiliary optical unit may be constituted as a mechanism for hanging the auxiliary optical unit by means of three wires instead of the gimbal mechanism.

## Claims

1. Liquid level measuring apparatus comprising means for transmitting a beam of modulated light waves onto the surface of the liquid, said means including an objective lens means (22, 23), means (2, 3, 4) for receiving said beam after reflection from the surface of the liquid after having passed back through said objective lens means (22, 23), and means for determining the level of the liquid on the basis of a time lag between the transmitted beam and the received beam, characterised in that the objective lens means (22, 23) is constituted by two objective lens units consisting of a first objective lens unit (22) containing a first objective lens (24) and a relay lens (26), for forming an image of the light beam at the focal point (32) thereof, and an auxiliary objective lens unit (23), containing a second objective lens (29), for projecting the light waves from said focal point upon the surface of the liquid, and the auxiliary objective lens unit (23) is attached to the first objective lens unit (22) by means of a suspension support mechanism (31), which is such that the first objective lens unit (22) can rotate freely with respect to the auxiliary objective lens unit (23) about said focal point (32) as a center, whereby the auxiliary objective lens unit (23) can remain in its normal orientation with its axis perpendicular to the liquid surface, if the first objective lens unit (22) is tilted out of the position by movement of its support.

2. A liquid level height-measuring apparatus according to Claim 1, wherein the suspension support mechanism is a gimbals mechanism (31).

## Patentansprüche

1. Vorrichtung zur Messung eines Flüssigkeitspegels mit Mitteln zur Übertragung eines Strahlenbündels aus modulierten Lichtwellen auf die Oberfläche der Flüssigkeit, wobei die Mittel eine Objektivlinsenanordnung (22, 23), eine Empfängeranordnung (2, 3, 4) zum Empfangen des Strahlenbündels nach der Reflexion an der Oberfläche der Flüssigkeit und nach dem Wiederdurchgang durch die Objektivlinsenanordnung (22, 23) und Mittel zum Feststellen des Flüssigkeitspegels auf der Basis einer Zeitverschiebung zwischen dem ausgesandten und empfangenen Strahlenbündel aufweisen, dadurch gekennzeichnet, daß die Objektivlinsenanordnung aus zwei Objektivlinseneinheiten gebildet ist, von denen die erste Objektivlinseneinheit (22) eine erste Objektivlinse (24) und eine Kombinationslinse (26) zur Bildung eines Bildes des Lichtstrahlenbündels an ihrem Brennpunkt und eine Hilfsobjektivlinseneinheit (23) eine zweite Objektivlinse (29) zum Projizieren der Lichtwellen vom Brennpunkt auf die Oberfläche der Flüssigkeit aufweist, wobei die Hilfsobjektivlinseneinheit (23) mittels eines Aufhängungsmechanismus (31) an der ersten Objektivlinseneinheit (22) derart befestigt ist, daß die erste Objektivlinseneinheit (22) sich in bezug auf die Hilfsobjektivlinseneinheit (23) um den Brennpunkt (32) als Mittelpunkt frei drehen kann und wobei die Hilfsobjektivlinseneinheit (23) in ihrer normalen Ausrichtung mit ihrer Achse senkrecht zur Flüssigkeitsoberfläche verbleibt, wenn die erste Objektivlinseneinheit (22) durch Bewegung ihrer Aufhängung aus der Stellung geschwenkt wird.

2. Vorrichtung nach Anspruch 1, dadurch gekennzeichnet, daß der Aufhängungsmechanismus eine Kardanaufhängung (31) ist.

**Revendications**

1. Appareil de mesure du niveau du liquide comportant des moyens pour envoyer un faisceau d'ondes lumineuses modulées sur la surface du liquide, lesdits moyens comprenant des moyens (22, 23) formant lentille objectif, des moyens (2, 3, 4) pour recevoir ledit faisceau après réflexion par la surface du liquide et après qu'il soit repassé par lesdits moyens (22, 23) formant lentille objectif, ainsi que des moyens pour déterminer le niveau du liquide sur la base du retard de temps entre le faisceau envoyé et le faisceau reçu, caractérisé en ce que les moyens (22, 23) formant lentille objectif sont constitués par deux ensembles formant lentille objectif et consistant en un premier ensemble (22) formant lentille objectif et contenant une première lentille objectif (24) et une lentille relais (26) pour former une image du faisceau lumineux en son point focal (32), et en un ensemble auxiliaire (23) formant lentille objectif et contenant une seconde lentille objectif (29) pour envoyer les ondes lumineuses, depuis ledit point focal, sur la surface du liquide; et en ce que l'ensemble auxiliaire (23) formant lentille objectif est fixé au premier ensemble (22) formant lentille objectif au moyen d'un mécanisme support à suspension (31) qui est tel que le premier ensemble (22) formant lentille objectif peut tourner librement par rapport à l'ensemble auxiliaire (23) formant lentille objectif autour dudit point focal (32) comme centre, ce par quoi l'ensemble auxiliaire (23) formant lentille objectif peut rester dans son orientation normale avec son axe perpendiculaire à la surface du liquide si le premier ensemble (22) formant lentille objectif est basculé hors de sa position par suite du mouvement de son support.

2. Appareil de mesure du niveau du liquide selon la revendication 1, dans lequel le mécanisme support à suspension est un mécanisme à cardan (31).

# F I G . 1

# F I G. 2

# F I G. 3

# F I G. 4

# F I G. 5